# EUROPEAN PATENT SPECIFICATION

(11) **EP 2 566 138 B1**
(45) Date of publication and mention of the grant of the patent: **05.11.2014**
(21) Application number: 11179592.8
(22) Date of filing: 31.08.2011
(51) Int. Cl.: H04L 29/06, H04L 29/12

(54) **Method and system for routing data traffic**
Verfahren und System zur Leitung des Datenverkehrs
Procédé et système pour acheminer le trafic de données

(43) Date of publication of application: 06.03.2013
(73) Proprietor: Liberty Global Europe Holding B.V., 1119 PE Schiphol-Rijk (NL)
(72) Inventor: Zwart, Cornelis Remment, 2352 XE Leiderdorp (NL)
(74) Representative: Nederlandsch Octrooibureau

(56) References cited:
- WO-A1-2009/081688
- WO-A2-2005/050897
- US-A1- 2002 073 182
- US-A1- 2007 061 484
- US-A1- 2008 259 941
- US-A1- 2010 042 714
- US-A1- 2010 118 831
- US-A1- 2010 191 839
- DROMS BUCKNELL UNIVERSITY R: "Dynamic Host Configuration Protocol; rfc2131.txt", 19970301, 1 March 1997 (1997-03-01), XP015007915, ISSN: 0000-0003

## Description

### Field of the invention

The present invention relates to a method for providing network connectivity functionality in a combination of a first network connection formed by a media gateway and a second network connection formed by a generic gateway, a first group of IP clients being connected to the media gateway, and a second group of IP clients being connected to the generic gateway.

### Prior art

International patent publication WO 2005/050897 discloses dynamic pool sharing to allow subnets with DHCP servers to borrow IP addresses when subnet capacity requirements reach pre-existing limits and assign the IP addresses to DHCP clients. The network relies on adjacent subnets to share IP addresses so that DHCP clients coupled to mobile devices remain coupled to a wireless network. When a DHCP client requests an IP address, a home subnet requests pool sharing with adjacent subnets and selects a candidate among the adjacent subnets. The home subnet then negotiates the selected candidate with the DHCP client.

US patent nublication US 2010/191839 discloses techniques for synchronizing resource bindings within computer networks. An intermediate network device comprising an interface card and a control unit may implement these techniques. The interface card receives a message from a server that allocates a network address for use buy a client device identified buy a unique identifier. The control unit stores data defining a binding between the unique identifier and the network address. The control unit includes a binding synchronization module that determines whether the binding release occurs in response to receiving a release message from the client device, and automatically generates a release message on behalf of the client device upon determining that the binding release did not occur in response to receiving a release message. The binding synchronization module outputs the automatically generated release message to the server that reserved the L3 network address.

US patent publication US 2010/118831 discloses a method and a wireless access point device for a network layer handoff a wireless mobile node over a wireless local area network. The method includes detecting a wireless mobile node that has moved into the coverage area the wireless access point device; maintaining an available IP address pool; selecting a temporary IP address from the IP access pool in response to the detection of the mobile node moving into the coverage area; and assigning a temporary IP address to the mobile node for use by the node during an interim period. The method produces a network layer handoff of a wireless mobile node over a local area network.

European patent application EP-A-1 089 524 discloses a system for supporting multiple Internet service providers on a single network. A cable modem infrastructure is used that denies access to devices on a local network that are not registered with an authorized ISP. A registration process is used for gaining access to the Internet by allowing devices on the local network to establish Internet access agreements with an ISP.

### Summary of the invention

The present invention seeks to provide a solution for combining an existing local home network with a media oriented network.

The invention is represented by the independent claims; further aspects of the invention are represented by the dependent claims.

According to the present invention, a method according to the preamble defined above is provided, wherein the media gateway is arranged to receive from the generic gateway local IP addresses associated with the first group of IP clients, wherein an attachment link is provided between the media gateway and the generic gateway. This allows to have IP clients in the local home network accessible to the media gateway and to IP clients connected to the media gateway and vice versa, wherein the media gateway comprises a router part and LAN interfaces, and the media gateway in a boot-up process is configured to:
- block all incoming and outgoing DHCP traffic on the LAN interfaces, except from the attachment link where outgoing DHCP request and incoming DHCP replies will be allowed;
- send out a DHCP request for the router part of the media gateway over the attachment link;
- receive from the generic gateway a DHCP response over the attachment link;
- configure the router part of the media gateway with the IP address thus obtained;
- send out DHCP requests for a configurable number of dummy clients using locally administered private MAC-addresses over the attachment link;
- receive from the generic gateway DHCP responses over the attachment link, such that for each privately administered MAC-address a valid set of IP address parameters is obtained by the media gateway,
- save the sets of IP address parameters,
- enable a DHCP server comprised in the media gateway
- enable DHCP in- and outgoing traffic for the DHCP server of the media gateways, except on the attachment link where only outgoing DHCP requests and incoming DHCP replies for the DHCP client are allowed.

Thus, the media gateway discerns over the generic gateway in its functionality, and in the type of network it is connected to: The media gateway (or first type of gateway) is connected via a first network connection to a media provider network, while the generic gateway (or second type of gateway) is connected via an access provider to a wide area network such as the Internet. Also, the type of IP clients connectable or connected to the media gateway is a special type of IP clients, such as television sets, set top boxes and the like, which have e.g. requirements in relation to quality of service. This set-up, both physically and logically, is not disclosed nor suggested in the prior art.

### Short description of drawings

The present invention will be discussed in more detail below, using a number of exemplary embodiments, with reference to the attached drawings, in which
Fig. 1 shows a schematic diagram of an Internet access network and a local home network in combination with a media oriented network; and
Fig. 2 shows a detailed block diagram of a media gateway as used in a present invention embodiment.

### Detailed description of exemplary embodiments

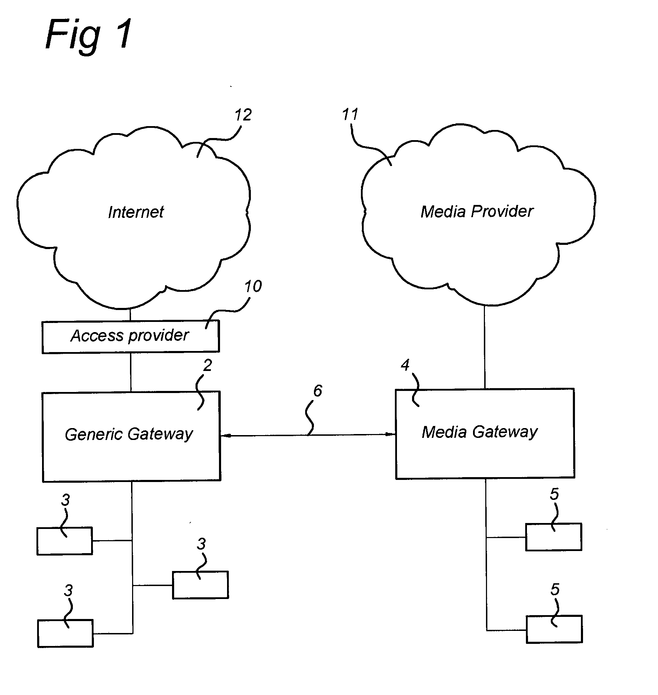

Nowadays, many homes are provided with a home (computer) network interconnecting various in-home devices 3, e.g. using an Internet Protocol (IP) network. The in-home devices 3 are in the present description embodied as clients in a computer network, and comprise e.g. computers, portable computer devices, network attached storage (NAS) devices, etc. A schematic diagram of such a home network is shown on the left side in Fig. 1. A generic gateway 2 may provide an interconnection facility between the in-home devices 3 as well as a connection to a global or wide area network 12, such as the Internet, via access provider 10. According to the present invention embodiments, additional elements are added to the home network, to also allow media oriented devices 5, such as television sets or set top boxes, to connect to one or more of the in-home devices 3. The media oriented devices 5 are connected to a media gateway 4 using network based (IP) connections. The media gateway 4 is connected to a media provider network 11 (which can have a connection to the wide area network 12 as indicated by the dotted line) to allow the delivery of media content (video streams for TV channels, video on demand programs, etc.) to one of the media oriented devices 5.

Users of (media) network services, such as cable network customers, have often installed and are using CPE (Customer Premises Equipment) routers to enable a home network to connect multiple in-home devices 3 (typically using Wi-Fi, but also wired Ethernet, MoCA or PowerLAN connections are possible).

To these existing home networks, the media gateway 4 may be added to allow interfacing with the media provider network 11 for delivery of media content to the media oriented devices 5. The media provider network 11 may be limited to delivery of media content (e.g. for servicing set top boxes in a home), but may also include other services, such as telephony services, or Internet provider services.

The media gateway 4 technically performs IP routing between the in-home network (in the present invention embodiments comprising the media oriented devices 5 and possibly one or more of the in-home devices 3 and media provider network 11. As the generic gateway 4 also performs IP routing between the in-home network and the wide are network 12, a mechanism and coordination between the respective gateways 2, 4 is needed to ensure upstream traffic (i.e. traffic sent from the in-home network to the access provider) is routed via the correct gateway (generic gateway 2 or media gateway 4). This problem is normally solved in backbone networks by the use of dynamic routing protocols, however for typical in-home gateways these mechanisms do not apply: memory, processing, administration requirements usually make this an impossible option. In addition to the upstream routing problem, an additional problem arises from the fact that the media gateway 4 will use several multicast applications in the in-home network. To ensure proper functioning of multicast in a network, it is required that the in-home network is a single layer-2 broadcast/multicast domain (i.e. no layer-3 routing is required for IP connectivity between nodes 3, 5 in the customer's home).

As shown in the schematic diagram of Fig. 1, the necessary connection between the generic gateway 2 and media gateway 4 is provided by an attachment link 6, which will be discussed in more detail below.

The goal of the present invention embodiments is to enable the realization of a single logical home network without the need of layer-3 IP routing between the in-home network components 2-5, while having both the generic gateway 2 and the media gateway 4 present and connected to the home network devices 3, 5 and the respective access and media provider(s) (i.e. access provider 10 (to wide area network 12) and media provider network 11.

The present invention also ensures in a specific embodiment that media clients (a special class of media oriented devices 5) will only join the home network when they are directly connected to a media gateway 4, so that the media gateway 4 can ensure properly quality of service and traffic prioritization for the media client devices 5.

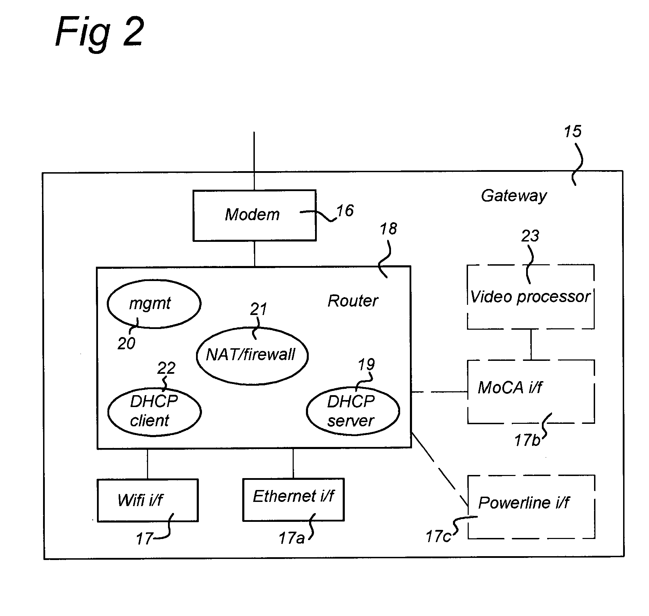

In Fig. 2 a generic block diagram is shown of functional modules of the media gateway 4 as discussed above. It is noted that also the generic gateway 2 may have a similar structure and functional elements. The media gateway 4 is provided with a wide area network (WAN) interface 16 for connection to a network such as the media provider network 11 (e.g. a cable modem). Furthermore, the media gateway 4 is provided with a plurality of local area network (LAN) interfaces 17 for connection to clients in the home network (in-home devices 3 and media oriented devices 5). The LAN interfaces 17 are e.g. Wifi interfaces (17 in Fig. 2), Ethernet interfaces (17a in Fig. 2), PowerLan interfaces (17c in Fig. 2) and the like, or dedicated interfaces (e.g. Multimedia over Coax, MOCA, 17b in Fig. 2). The media gateway 4 furthermore comprises a router 18, which as such is well known in computer network systems using IP connectivity. Also, a DHCP (Dynamic Host Configuration Protocol) server 19 is present in the media gateway 4 as part of the functionality of router 18. For all these elements 16-19 (and other standard router functionality such as management control 20, NAT/Firewall 21, etc.) the functionality and possible (hardware and/or software) implementations are well known to the person skilled in the art, and will not be discussed in detail herein. However, further functionality is provided in especially the media gateway 4, e.g. in the form of a DHCP client 22 as discussed in more detail below. Also, the media gateway 4 may be provided with further dedicated hardware, e.g. a video processor 23 and a LAN interface (e.g. using the MOCA interface 17b version of the LAN interface 17 as discussed above).

The media gateway 4 as shown in Fig. 2 is a processing system which is provided with many components, such as a data processor, memory and interfaces, as well known to the skilled person. A specific functional item in respect of the present invention embodiments is the addressing functionality of the media gateway 4. In its memory, the media gateway 4 has stored a MAC address for the WAN interface 16, as well as a global IP address associated therewith. This allows addressing of the specific media gateway 4 in the media provider network 11 and the Internet 12. Furthermore, under control of the DHCP server 19, a database is built using MAC addresses and associated IP addresses of hardware units 3, 5 present in the associated local area network.

In the present invention embodiments, additional functionality is provided in the functionality of the media gateway 4, the functionality of some of the possible local connections (LAN interface 17) and the associated DHCP database. An example of a DHCP database is comprising a plurality of rows, where a number of fields are filled during operation of the media gateway 4:

| MAC address | | IP address | DHCP lease time | Media device flag |
|---|---|---|---|---|
| WAN interface (16) | | Global IP address | Period | n/a |
| LAN interface (17) | | Local IP address | Local lease period | n/a |
| | client #1 | Local IP address | Local lease period | y/n |
| | client #2 | Local IP address | Local lease period | y/n |
| | \| | \| | \| | \| |
| | client #n | Local IP address | Local lease period | y/n |

In general wording the media gateway 4 is configured to provide network connectivity (bridging and/or router) functionality in a combination of a first network connection formed by a media gateway 4 (for providing media oriented services) and a second network connection formed by a generic gateway 2 (e.g. an existing home network with Internet connection). A first group of IP clients 5 is connected to the media gateway 4, and a second group of IP clients 3 is connected to the generic gateway 2. The media gateway 4 is arranged to receive from the generic gateway 2 local IP addresses associated with the first group of IP clients 5. An attachment link 6 is provided between the media gateway 4 and the generic gateway 2 to obtain that information. This allows access to the second group of clients 3 from the first group of clients 5 via the media gateway 4.

In a more specific embodiment, the media gateway 4 comprises a router part 18 and LAN interfaces 17 as described above. The media gateway 4 in a boot-up process is configured to:
- block all incoming and outgoing DHCP traffic on the LAN interfaces 17, except from the attachment link 6 where outgoing DHCP request and incoming DHCP replies will be allowed;
- send out a DHCP request for the router part 18 of the media gateway 4 over the attachment link 6;
- receive from the generic gateway 2 a DHCP response over the attachment link 6;
- configure the router part 18 of the media gateway 4 with the IP address thus obtained;
- send out DHCP requests for a configurable number of dummy clients using locally administered private MAC-addresses over the attachment link 6;
- receive from the generic gateway 2 DHCP responses over the attachment link 6, such that for each privately administered MAC-address a valid set of IP address parameters (or lease set) is obtained by the media gateway 4;
- save the sets of IP address parameters;
- enable a DHCP server 19 comprised in the media gateway 4;
- enable DHCP in- and outgoing traffic for the DHCP server 19 of the media gateway 4, except on the attachment link 6 where (still) only outgoing DHCP requests and incoming DHCP replies for DHCP client 22 are allowed.

Whenever the media gateway 4 receives a DHCP request on one of its LAN interfaces 17 or router 18, the media gateway 4 DHCP server 19 will reply to this request using IP address and network mask information from one of the sets of IP address parameters as obtained.

Some of the functionality discussed below may be present in various embodiments of the present invention.

The media gateway 4 is in a further embodiment arranged to stop the boot-up process if the media gateway 4 is unable to obtain a preconfigured minimum amount of lease sets. Furthermore, the media gateway 4 may then reconfigure the media gateway 4 to function as a home networking server.

In a further embodiment, depending on specific values of the DHCP options received in a DHCP request through its LAN interfaces 17, the media gateway DHCP server 19 will mark the associated client as a media oriented device 5 or as an in-home device 3. This may e.g. be stored in the DHCP database as discussed above.

If the client is a media oriented device 5, the media gateway DHCP server 19 sets the default gateway equal to the LAN IP address associated with the router part 18 of the media gateway 4 in a further embodiment. Furthermore, it will set the DHCP lease time to a configured value. If the client device is an in-home device 3, the media gateway DHCP server 19 sets the default gateway equal to the LAN IP address associated with the router part 18 of the media gateway 4 (and will set the DHCP lease time to a configured value) or sets the default gateway equal to the generic gateway 2. This latter option may depend on the available information and is depending on the administrative configuration in the home network.

In a further embodiment, if the client device is a media oriented device 5, the media gateway 4 DHCP server 19 will insert specific DHCP option values in a DHCP reply, identifying the DHCP server 19 as media gateway 4. This has the effect that if the DHCP client is a media oriented device 5, it will accept only DHCP responses from a media gateway 4 based on the option values in the DHCP reply. A media oriented device 5 will not accept DHCP replies coming from a DHCP server in a gateway other than the media gateway 4 (e.g. in generic gateway 2).

On receiving confirmation from a client 3, 5 of a DHCP offer (i.e. a DHCP ACK message), the media gateway 4 DHCP server 19 will save the set of IP address parameters (especially IP address and client MAC-address and lease time) in its DHCP lease-database (such as the DHCP database as discussed above).

In a further embodiment, the media gateway 4 will monitor the amount of available valid sets of IP address parameters (i.e. lease sets), and when the amount drops below a preconfigured value, the media gateway 4 requests additional valid sets of IP address parameters through the attachment link 6 from the DHCP server of the generic gateway 2. This will assure that changes in the configuration of the network (especially with respect to the media oriented devices 5) can be dealt with directly, without interrupting any of the active services provided by the media gateway 4. When the media gateway 4 is unable to obtain the lease sets, the media gateway 4 will continue to give out leases as per above description, until no lease sets are available.

In an even further embodiment, the media gateway 4 periodically refreshes the obtained valid sets of IP address parameters (lease sets) with the generic gateway 2. This will be done conform the DHCP lease times and DHCP refresh intervals as actually valid, and serves to keep the DHCP database in a condition to keep the system running.

The media gateway 4 monitors the physical and/or logical status of the attachment link 6 in a further embodiment. When the attachment link 6 is disconnected, the media gateway 4 will run in home network client-disconnected mode until the attachment link 6 connectivity is restored and will continue to give out leases as per above description, until no lease sets are available.

When the media gateway 4 determines that the generic gateway 2 configuration or topology of the first and second group of IP clients 3, 5 has changed (such that already acquired lease sets are no longer valid to obtain a single layer home network), the media gateway 4 is arranged in an embodiment to change to operation in an error mode, and disable the attachment link 6. As in other embodiments, the media gateway 4 can continue to give out leases as per above description. This mode of operation is maintained until the home network process is reinitialized, as the necessary data is then obtained for the then actual situation.

In the following, an example of steps executed in various elements of the system described above is presented for an embodiment comprising virtually all embodiments as discussed above.
1) The media gateway 4 has a functional cable connection and has a valid IP address for its router WAN interface 16;
2) The media gateway 4 will be configured in "home networking client" mode
3) One of the physical or logical network interfaces 17 (Ethernet, MoCA, Wifi, Powerline) of the media gateway 4 will be designated as attachment link 6. Alternatively, a dedicated attachment link 6 is used.
4) At boot up of the media gateway 4, all incoming and outgoing DHCP traffic will be blocked on all interfaces 17, except from the attachment link 6, where outgoing DHCP request and incoming DHCP replies will be allowed.
5) The media gateway 4 will send out a DHCP request for its logical router LAN interface 17 over the attachment link 6
6) The generic gateway 2 will send a DHCP response back to the media gateway 4 over the attachment link 6
7) The media gateway 4 will configure its logical router LAN interface 17 with the IP address thus obtained
8) The media gateway 4 will send out DHCP requests for a configurable number of dummy clients using so-called locally administered private MAC-addresses over the attachment link 6
9) The generic gateway 2 will send DHCP responses (lease sets) back to the media gateway 4 over the attachment link 6, such that for each privately administered MAC-address a valid set of IP address parameters is obtained by the media gateway 4
10) If the media gateway 4 is unable to obtain a preconfigured minimum amount of lease sets, the media gateway 4 will stop the process and reconfigure to function as a home networking server
11) The media gateway 4 will save the sets of IP address parameters
12) The media gateway 4 will enable its DHCP server 19
13) The media gateway 4 will enable DHCP in- and outgoing traffic on all interfaces 16, 17, except on the attachment link 6, where outgoing DHCP requests and incoming DHCP replies for DHCP client 22 will be allowed.
14) Whenever now the media gateway 4 receives a DHCP request on one of its LAN interfaces 17, the media gateway 4 DHCP server 19 will reply to this request using IP address and network mask information from one of the sets as obtained in step 9).
15) Depending on specific values of the DHCP options sent in the DHCP request by the client, the media gateway 4 DHCP server 19 will mark clients as media oriented device 5 or as in-home device 3
16) If the client is a media oriented device 5, the media gateway 4 DHCP server 19 will set the default gateway equal to its own router 18 LAN IP address and will set the DHCP lease time to a configured value.
17) If the client device is not a media oriented device 5 (thus an in-home device 3), the media gateway 4 DHCP server 19 may set the default gateway equal to its own router 18 LAN IP address and will set the DHCP lease time to a configured value or may set the default gateway equal to the default gateway information as obtained in step 9) for the information set in use, depending on administrative configuration
18) If the client device is a media oriented device 5 the media gateway 4 DHCP server 19 will insert specific DHCP option values in the DHCP reply, identifying the DHCP server 19 as media gateway 4
19) If the DHCP client is a media oriented device 5, it will accept only DHCP responses from a media gateway 4 based on the option values in the DHCP reply. A media oriented device 5 will not accept DHCP replies that are not coming from media gateway 4 DHCP server 19.
20) On confirmation of the client of the DHCP offer (DHCP ACK), the media gateway 4 DHCP server 19 will save the set of IP address parameters (especially IP address and client MAC-address and lease time) in its DHCP lease-database.
21) The media gateway 4 will monitor the amount of available lease sets; when this amount drops below a preconfigured value, the media gateway 4 DHCP client 22 will request additional lease sets through the attachment link 6 from the generic gateway 2 DHCP server. When the media gateway 4 is unable to obtain the lease sets, the media gateway 4 will continue to give out leases as per above description, until no lease sets are available
22) The media gateway 4 will monitor the physical and/or logical status of the attachment link 6. When the attachment link 6 is disconnected, the media gateway 4 will run in home network client-disconnected mode and continue to give out leases as per above description, until no lease sets are available or the attachment link 6 connectivity is restored
23) The media gateway 4 will periodically refresh the obtained lease sets with the generic gateway 2 conform the DHCP lease times and DHCP refresh intervals
24) If the media gateway 4 determines that the generic gateway 2 configuration or home network topology has changed such that already acquired lease sets are no longer valid to obtain a single layer home network, the media gateway 4 will run in error mode, disable the attachment link 6 and continue to give out leases as per above description until the home network process is reinitialized.

The present invention embodiments as described above allow for various applications in a media oriented network. E.g. a set top box 5 will now be able to access e.g. a Network Attached Storage device or home computer (as examples of in-home device 3) and display stored video or pictures on a television screen. Furthermore, the present invention embodiments allow to enlarge both the number of in-home devices 3 and the media oriented devices 5 in their respective networks (connected to generic gateway 2 and media gateway 4, respectively). However, it would also be possible to have a connection from an in-home device 3 to the media gateway 4, as this media gateway 4 can correctly route data to and from this in-home device 3. This is e.g. advantageous in the area of connection, as now also the media gateway 4 is available for (wireless) connections to the in-home device 3. In a further embodiment, the media gateway 4 could even take over the functionality of the generic gateway 2, provided that the media gateway is also able to provide Internet connectivity.

The present invention embodiments have been described above with reference to a number of exemplary embodiments as shown in the drawings. Modifications and alternative implementations of some parts or elements are possible. The scope of protection is defined in the appended claims.

## Claims

1. Method for providing network connectivity functionality in a combination of a first network connection formed by a media gateway (4) and a second network connection formed by a generic gateway (2),
a first group of IP clients (5) being connected to the media gateway (4), and a second group of IP clients (3) being connected to the generic gateway (2),
wherein the media gateway (4) is arranged to receive from the generic gateway (2) local IP addresses associated with the first group of IP clients (5),
wherein an attachment link (6) is provided between the media gateway (4) and the generic gateway (2)
wherein the media gateway (4) comprises a router part (18) and local area network, LAN, interfaces (17), and the media gateway (4) in a boot-up process is configured to:
- block all incoming and outgoing dynamic host configuration protocol, DHCP, traffic on the LAN interfaces (17), except from the attachment link (6) where outgoing DHCP request and incoming DHCP replies will be allowed;
- send out a DHCP request for the router part (18) of the media gateway (4) over the attachment link (6);
- receive from the generic gateway (2) a DHCP response over the attachment link (6);
- configure the router part (18) of the media gateway (4) with the IP address thus obtained;
- send out DHCP requests for a configurable number of dummy clients using locally administered private MAC-addresses over the attachment link (6);
- receive from the generic gateway (2) DHCP responses over the attachment link (6), such that for each locally administered MAC-address a valid set of IP address parameters is obtained by the media gateway (4);
- save the sets of IP address parameters;
- enable a DHCP server (19) comprised in the media gateway (4);
- enable DHCP in- and outgoing traffic for the DHCP server (19) of the media gateway (4), except on the attachment link (6) where only outgoing DHCP requests and incoming DHCP replies for the DHCP client (22) are allowed.

2. Method according to claim 1, wherein the media gateway (4) is further arranged to stop the boot-up process if the media gateway (4) is unable to obtain a preconfigured minimum amount of lease sets.

3. Method according to claim 1 or 2,
wherein depending on specific values of the DHCP options received in a DHCP request from a client device through its LAN interfaces (17), the media gateway DHCP server (19) will mark the client device as a media oriented device (5) or as an in-home device (3).

4. Method according to claim 3, wherein
if the client device is a media oriented device (5), the media gateway DHCP server (19) sets the default gateway equal to the LAN IP address associated with the router part (18) of the media gateway (4).

5. Method according to claim 3, wherein
if the client device is an in-home device (3), the media gateway DHCP server (19) sets the default gateway equal to the LAN IP address associated with the router part (18) of the media gateway (4) or sets the default gateway equal to the generic gateway (2).

6. Method according to claim 4 or 5,
wherein if the client device is a media oriented device (5) the media gateway (4) DHCP server (19) will insert specific DHCP option values in a DHCP reply, identifying the DHCP server (19) as media gateway (4).

7. Method according to any one of claims 1-6, wherein
on receiving confirmation from a client of a DHCP offer, the media gateway (4) DHCP server (19) will save the set of IP address parameters.

8. Method according to any one of claims 1-7, wherein
the media gateway (4) monitors the amount of available valid sets of IP address parameters, and when the amount drops below a preconfigured value, the media gateway (4) requests additional valid sets of IP address parameters through the attachment link (6) from the DHCP server of the generic gateway (2).

9. Method according to any one of claims 1-8, wherein the media gateway (4) monitors the physical and/or logical status of the attachment link (6).

10. Method according to any one of claims 1-9, wherein the media gateway (4) DHCP client (22) periodically refreshes the obtained valid sets of IP address parameters with the generic gateway (2).

11. Method according to any one of claims 1-10, wherein, if the media gateway (4) determines that the generic gateway (2) configuration or topology of the first and second group of IP clients has changed, the media gateway (4) is arranged to change to operation in an error mode, and disable the attachment link (6).

12. Media gateway for interfacing with a first network,
comprising a router, a wide area network, WAN, interface and at least one LAN interface connected to the router, wherein the media gateway is arranged to provide the functionality of the method according to one of the claims 1-11.

## Patentansprüche

1. Verfahren zum Bereitstellen der Funktionalität der Netzwerkkonnektivität in einer Kombination aus einer ersten Netzwerkverbindung, die durch ein Media-Gateway (4) gebildet wird, und einer zweiten Netzwerkverbindung, die durch ein generisches Gateway (2) gebildet wird,
wobei eine erste Gruppe von IP-Clients (5) mit dem Media-Gateway (4) verbunden ist, und eine zweite Gruppe von IP- Clients (3) mit dem generischen Gateway (2) verbunden ist,
wobei das Media-Gateway (4) angeordnet ist, um lokale IP-Adressen, die der ersten Gruppe von IP-Clients (5) zugeordnet sind, vom generischen Gateway (2) zu empfangen,
wobei eine Anlagenverknüpfung (6) zwischen dem Media-Gateway (4) und dem generischen Gateway (2) bereitgestellt wird,
wobei das Media-Gateway (4) einen Routerteil (18) und Local-Area-Network (LAN)-Schnittstellen (17) aufweist und das Media-Gateway (4) in einem Boot-Verfahren konfiguriert ist, um:
- den gesamten eingehenden und ausgehenden Dynamic-Host-Configuration-Protocol (DHCP)-Verkehr auf den LAN-Schnittstellen (17) zu blockieren, außer von der Anlagenverknüpfung (6), wo ausgehende DHCP-Anfragen und eingehende DHCP-Antworten zugelassen werden;
- eine DHCP-Anfrage für den Routerteil (18) des Media-Gateway (4) über die Anlagenverknüpfung (6) auszusenden;
- vom generischen Gateway (2) eine DHCP-Antwort über die Anlagenverknüpfung (6) zu empfangen;
- den Routerteil (18) des Media-Gateway (4) mit der dadurch erhaltenen IP-Adresse zu konfigurieren;
- DHCP-Anfragen für eine konfigurierbare Anzahl von Dummy-Clients unter Verwendung von lokal verwalteten privaten MAC-Adressen über die Anlagenverknüpfung (6) auszusenden;
- von dem generischen Gateway (2) DHCP-Antworten über die Anlagenverknüpfung (6) zu empfangen, derart, dass man für jede lokal verwaltete MAC-Adresse ein gültiges Set von IP-Adressparametern durch das Media-Gateway (4) erhält;
- die Sets von IP-Adressparametern speichern;
- einen im Media-Gateway (4) enthaltenen DHCP-Server (19) freizugeben;
- ein- und ausgehenden DHCP-Verkehr für den DHCP-Server (19) des Media-Gateway (4) freizugeben, außer auf der Anlagenverknüpfung (6), wo ausschließlich ausgehende DHCP-Anfragen und eingehende DHCP-Antworten für den DHCP-Client (22) zugelassen werden.

2. Verfahren nach Anspruch 1, wobei das Media-Gateway (4) weiterhin angeordnet ist, um das Boot-Verfahren anzuhalten, wenn das Media-Gateway (4) unfähig ist, eine vorkonfigurierte Mindestmenge an Lease-Sets zu erhalten.

3. Verfahren nach Anspruch 1 oder 2,
wobei je nach spezifischen Werten der DHCP-Optionen, die man bei einer DHCP-Anfrage von einer Client-Vorrichtung durch deren LAN-Schnittstellen (17) erhält, der Media-Gateway-DHCP-Server (19) die Client-Vorrichtung als Media-Oriented-Vorrichtung (5) oder als In-Home-Vorrichtung (3) kennzeichnen wird.

4. Verfahren nach Anspruch 3, wobei,
wenn die Client-Vorrichtung eine Media-Oriented-Vorrichtung (5) ist, der Media-Gateway-DHCP-Server (19) das Default-Gateway gleich der dem Routerteil (18) des Media-Gateway (4) zugeordneten LAN-IP-Adresse einstellt.

5. Verfahren nach Anspruch 3, wobei
wenn die Client-Vorrichtung eine In-Home-Vorrichtung (3) ist, der Media-Gateway-DHCP-Server (19) das Default-Gateway gleich der dem Routerteil (18) des Media-Gateway (4) zugeordneten LAN-IP-Adresse einstellt oder das Default-Gateway gleich dem generischen Gateway (2) einstellt.

6. Verfahren nach Anspruch 4 oder 5,
wobei, wenn die Client-Vorrichtung eine Media-Oriented-Vorrichtung (5) ist, der Media-Gateway (4)-DHCP-Server (19) spezifische DHCP-Optionswerte in eine DHCP-Anfrage einfügen wird, wodurch der DHCP-Server (19) als Media-Gateway (4) identifiziert wird.

7. Verfahren nach einem der Ansprüche 1-6, wobei
der Media-Gateway (4)-DHCP-Server (19) nach Erhalt einer Bestätigung von einem Client eines DHCP-Angebots das Set von IP-Adressparametern speichern wird.

8. Verfahren nach einem der Ansprüche 1-7, wobei
das Media-Gateway (4) die Menge verfügbarer gültiger Sets von IP-Adressparametern überwacht, und das Media-Gateway (4) über die Anlagenverknüpfung (6) vom DHCP-Server des generischen Gateway (2) zusätzliche gültige Sets von IP-Adressparametern anfragt, wenn die Menge einen vorkonfigurierten Wert unterschreitet.

9. Verfahren nach einem der Ansprüche 1-8, wobei das Media-Gateway (4) den physischen und/oder logischen Status der Anlagenverknüpfung (6) überwacht.

10. Verfahren nach einem der Ansprüche 1-9, wobei der Media-Gateway (4)-DHCP-Client (22) die erhaltenen gültigen Sets von IP-Adressenparametern mit dem generischen Gateway (2) aktualisiert.

11. Verfahren nach einem der Ansprüche 1-10, wobei, wenn das Media-Gateway (4) bestimmt, dass sich die Konfiguration des generischen Gateway (2) oder Topologie der ersten und zweiten Gruppe von IP-Clients geändert hat, das Media-Gateway (4) angeordnet ist, um zu einem Betrieb in einem Fehlermodus zu wechseln und die Anlagenverknüpfüng (6) zu deaktivieren.

12. Media-Gateway zum Bilden einer Schnittstelle mit einem ersten Netzwerk, aufweisend einen Router, eine Wide-Area-Network (WAN)-Schnittstelle und zumindest eine LAN-Schnittstelle, die mit dem Wide-Area-Network (WAN)-Router verbunden ist, wobei das Media-Gateway angeordnet ist, um die Funktionalität des Verfahrens nach einem der Ansprüche 1-11 bereitzustellen.

## Revendications

1. Procédé permettant d'assurer une fonctionnalité de connectivité réseau dans une combinaison d'une première connexion réseau formée par une passerelle média (4) et d'une deuxième connexion réseau formée par une passerelle générique (2),
un premier groupe de clients IP (5) étant connecté à la passerelle média (4), et un deuxième groupe de clients IP (3) étant connecté à la passerelle générique (2),
où la passerelle média (4) est agencée pour recevoir à partir de la passerelle générique (2) des adresses IP locales associées au premier groupe de clients IP (5),
où une liaison annexe (6) est prévue entre la passerelle média (4) et la passerelle générique (2),
où la passerelle média (4) comprend une partie routeur (18) et des interfaces (17) de réseau local, LAN, et la passerelle média (4) dans un processus de démarrage est configurée :
- pour bloquer tout trafic entrant et sortant de protocole de configuration d'hôte dynamique, DHCP, sur les interfaces LAN (17), à l'exception du trafic en provenance de la liaison annexe (6), où une demande DHCP sortante et des réponses DHCP entrantes seront autorisées ;
- pour envoyer une demande DHCP pour la partie routeur (18) de la passerelle média (4) sur la liaison annexe (6) ;
- pour recevoir à partir de la passerelle générique (2) une réponse DHCP sur la liaison annexe (6) ;
- pour configurer la partie routeur (18) de la passerelle média (4) avec l'adresse IP ainsi obtenue ;
- pour envoyer des demandes DHCP pour un nombre configurable de clients fictifs en utilisant des adresses MAC privées gérées localement sur la liaison annexe (6) ;
- pour recevoir à partir de la passerelle générique (2) des réponses DHCP sur la liaison annexe (6), de sorte que, pour chaque adresse MAC gérée localement, un ensemble valide de paramètres d'adresse IP soit obtenu par la passerelle média (4) ;
- pour sauvegarder les ensembles de paramètres d'adresse IP ,
- pour activer un serveur DHCP (19) inclus dans la passerelle média (4) ;
- pour activer le trafic DHCP entrant et sortant pour le serveur DHCP (19) de la passerelle média (4), à l'exception du trafic sur la liaison annexe (6) où seulement les demandes DHCP sortantes et les réponses DHCP entrantes pour le client DHCP (22) sont autorisées.

2. Procédé selon la revendication 1, dans lequel la passerelle média (4) est en outre agencée pour arrêter le processus de démarrage si la passerelle média (4) est incapable d'obtenir une quantité minimale préconfigurée d'ensembles de location.

3. Procédé selon la revendication 1 ou 2,
dans lequel le serveur DHCP de passerelle média (19) marquera le dispositif client en tant que dispositif orienté média (5) ou en tant que dispositif domestique (3), en fonction des valeurs spécifiques des options DHCP reçues dans une demande DHCP à partir d'un dispositif client à travers ses interfaces LAN (17).

4. Procédé selon la revendication 3, dans lequel
si le dispositif client est un dispositif orienté média (5), le serveur DHCP de passerelle média (19) règle la passerelle par défaut de manière à être égale à l'adresse IP LAN associée à la partie routeur (18) de la passerelle média (4).

5. Procédé selon la revendication 3, dans lequel
si le dispositif client est un dispositif à domicile (3), le serveur DHCP de passerelle média (19) établit la passerelle par défaut de manière à être égale à l'adresse IP LAN associée à la partie routeur (18) de la passerelle média (4) ou établit la passerelle par défaut de manière à être égale à la passerelle générique (2).

6. Procédé selon la revendication 4 ou 5,
dans lequel si le dispositif client est un dispositif orienté média (5) le serveur DHCP (19) de passerelle média (4) insérera des valeurs d'options DHCP spécifiques dans une réponse DHCP, identifiant le serveur DHCP (19) en tant que passerelle média (4).

7. Procédé selon l'une quelconque des revendications 1 à 6, dans lequel
au moment de la réception d'une confirmation à partir d'un client d'une offre DHCP, le serveur DHCP (19) de passerelle média (4) sauvegardera l'ensemble de paramètres d'adresse IP.

8. Procédé selon l'une quelconque des revendications 1 à 7, dans lequel la passerelle média (4) surveille la quantité d'ensembles valides disponibles de paramètres d'adresse IP, et lorsque la quantité tombe en dessous d'une valeur préconfigurée, la passerelle média (4) demande des ensembles valides supplémentaires de paramètres d'adresse IP à travers la liaison annexe (6) à partir du serveur DHCP de la passerelle générique (2).

9. Procédé selon l'une quelconque des revendications 1 à 8, dans lequel la passerelle média (4) surveille l'état logique et/ou physique de la liaison annexe (6).

10. Procédé selon l'une quelconque des revendications 1 à 9, dans lequel le client DHCP (22) de passerelle média (4) actualise périodiquement les ensembles valides obtenus de paramètres d'adresse IP avec la passerelle générique (2).

11. Procédé selon l'une quelconque des revendications 1 à 10, dans lequel, si la passerelle média (4) détermine que la configuration ou la topologie de passerelle générique (2) des premier et deuxième groupes de clients IP a été modifiée, la passerelle média (4) est agencée pour passer en fonctionnement dans un mode d'erreur, et pour désactiver la liaison annexe (6).

12. Passerelle média pour la création d'une interface avec un premier réseau,
comprenant un routeur, une interface de réseau étendu, WAN, et au moins une interface LAN connectée au routeur, où la passerelle média est agencée pour assurer la fonctionnalité du procédé selon l'une des revendications 1 à 11.
